(19) Europäisches Patentamt
European Patent Office
Office européen des brevets

(11) Publication number: 0 189 831 B1

# (12) EUROPEAN PATENT SPECIFICATION

(45) Date of publication of patent specification: 23.08.89

(51) Int. Cl.⁴: C 22 B 23/04, C 01 G 51/00, C 22 B 3/00

(21) Application number: 86100768.0

(22) Date of filing: 21.01.86

## (54) Cobalt recovery method.

(30) Priority: 22.01.85 JP 10673/85

(43) Date of publication of application: 06.08.86 Bulletin 86/32

(45) Publication of the grant of the patent: 23.08.89 Bulletin 89/34

(84) Designated Contracting States: BE DE FR GB IT SE

(56) References cited:
DE-B-1 298 089
FR-A-2 286 883
US-A-4 196 076
US-A-4 242 314
US-A-4 353 883
US-A-4 442 071

JOURNAL OF APPLIED CHEMISTRY OF THE USSR, vol. 50, no. 3, part 2, March 1977, pages 658-659, Plenum Publishing Co., New York, US; M.L. NAVTANOVICH et al.: "Extractive separation of nonferrous metals in nitric acid solutions"

(73) Proprietor: STARLOY INDUSTRIAL CO.,LTD.
3-16, Shindou
Matsubara-shi Osaka 580 (JP)

(72) Inventor: Ohtsuka, Nobuo
4-14-2, Kishibe-kita
Suita-shi Osaka 564 (JP)

(74) Representative: Bühling, Gerhard, Dipl.-Chem. et al
Patentanwaltsbüro Tiedtke-Bühling-Kinne Grupe-Pellmann-Grams-Struif Bavariaring 4
D-8000 München 2 (DE)

(56) References cited:
PATENTS ABSTRACTS OF JAPAN, vol. 9, no. 41 (C-267) 1764r, 21st February 1985; & JP - A - 59 185 770 (OOSAKAFU) 22-10-1984

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 189 831 B1

**Description**

This invention relates to a method for recovering cobalt compounds in which cobalt is transferred selectively into an organic extraction agent out of solutions containing nickel and cobalt, followed by stripping of cobalt into another aqueous solution, and more particularly to a method for easily obtaining crystalline cobalt compounds having good filtration property which do not contain sodium or calcium as impurities through the use of oxalic acid solution as a stripping agent.

As material technology has recently shown remarkable progress, rare metals in powder form are extensively used ranging from articles for daily use to high technology products. They are now drawing much attention as valuable materials indispensable for the development of new materials and for the improvement of equipment performance.

The demand for cobalt in powder form is particularly strong and it is believed that it will grow further in the coming years. However, e.g. Japan has scarce resources of cobalt and almost all the requirements are covered by the import.

On the other hand, scraps containing cobalt are increasingly generated and it is an important task for the secured supply of cobalt resources to recover cobalt in powder form from super-hardened alloy or stellite or catalyst wastes.

The recovery of cobalt from such wastes has been so far achieved through acid leaching of the scraps and separation and purification from the obtained decoction. However, nickel is often contained in the scraps along with cobalt and it is very difficult to separate the two components in recovering cobalt, because both of them are similar in the chemical properties.

Recently, however, an extraction agent has been developed that can extract and separate cobalt selectively from a solution containing cobalt and nickel, and a complete separation can be achieved without difficulty.

US—A—4 196 076 discloses a method for separating cobalt from nickel in an aqueous solution containing cobalt and nickel salts by contacting said solution with an organic solvent containing 2-ethylhexyl phosphonic acid mono-2-ethylhexyl ester and/or 3,5,5-trimethylhexyl phosphonic acid mono-3,5,5-trimethylhexyl ester and/or isodecyl phosphonic acid monoisodecyl ester as an effective extraction agent for the separation of cobalt from nickel, thus extracting cobalt into the organic phase, and subsequently separating the resulting cobalt loaded organic phase from the aqueous phase, said cobalt loaded organic phase possibly being scrubbed by contact with (a) diluted inorganic acid or (b) an aqueous solution containing cobalt salt.

Various kinds of methods have been developed in regard to the application methods of such an extraction agent. All of these methods are for the separation of cobalt and nickel. In most cases of cobalt recovery from the extraction agent, such inorganic acids are used as HCl, $H_2SO_4$, $HNO_3$, etc.

In the case of stripping with such inorganic acid, cobalt is released in the form of salts like $CoCl_2$ or $CoSO_4$. According to the conventional recovery method, alkali is added to the solution containing cobalt and the recovery is made in the form of a precipitate of cobalt hydroxide or cobalt carbonate.

The drawback of this method is the formation of a large amount of such salts as NaCl, $Na_2SO_4$, $CaCl_2$, etc., and a great deal of pure water is needed to wash cobalt hydroxide or cobalt carbonate if a material for powder form product is to be obtained (600 litres of pure water is needed per kg of cobalt). What is more, it is extremely difficult, even with use of such a large volume of pure water, to remove the salts completely.

Consequently, at the oxidation or reduction step to produce the cobalt in powder form, the remaining salts are decomposed and a gas is generated, causing the corrosion of furnace. This is another problem of the conventional method. Hence, no effective method has been yet established to recover the cobalt in powder form in the commercial production.

It is the object of the invention to provide an effective method for recovering cobalt from an aqueous solution containing cobalt and possibly nickel and other metal salts.

According to the invention, said object is achieved by a cobalt recovery method effecting the recovery of cobalt oxalate containing no other salts, where an extraction agent mainly composed of 2-ethyl hexylphosphonate mono-2-ethyl hexylester or di-2-ethyl hexylphosphate is used in order to extract, by liquid-liquid extraction, and separate cobalt from an aqueous solution containing cobalt and possibly nickel and other metal salts, said other metal salts, if present, being removed from said solution, except for sodium and calcium salts, prior to the liquid-liquid extraction, so that cobalt ions may be selectively shifted into said extraction agent and, after the separation from nickel ions, sodium salt, and calcium salt in said solution, said extraction agent containing cobalt is brought into contact with an aqueous solution of oxalic acid so that cobalt is subjected to stripping into the oxalic acid solution.

By the foregoing method, cobalt can be recovered in the form of cobalt oxalate with high purity.

Fig. 1 is a graph showing the relation between pH and $Cl^-$ concentration in the solvent;

Figs. 2 and 3 are graphs showing the relation between pH and extraction rate;

Fig. 4 shows the extraction curve;

Fig. 5 indicates the release curve; and

Fig. 6 represents the system diagram of the stripping step.

Detailed description of this invention is now given below including some of the preferred embodiments.

In this invention, 2-ethyl hexyl phosphonate mono-2-ethyl hexylester or di-2-ethyl hexyl phosphate is used as the above extraction agent for cobalt from the solution containing cobalt. This

agent is diluted, for example, with kerosene and is preferably added with octyl alcohol by 2 to 5%. With this mixture as the organic solvent, the contact between the aqueous phase and organic phase is conducted in a counter current multi-stage system, and the pH of each step is preferably kept at 4.5 to 5.0 in order to prevent the acid from moving into the organic phase and to allow only the cobalt ions to move into the organic phase.

For the stripping of the cobalt from the above organic phase, aqueous oxalic acid solution is used as the releasing agent and the contact between the aqueous phase and organic phase is carried out in a multistage system. In this way, cobalt forms crystalline cobalt oxalate. However, the crystals are fine and small in shape and light in weight. Hence, the phase separability becomes very poor.

However, if octyl alcohol is added in an amount of 2 to 5% by volume and the concentration of cobalt oxalate is kept below 10 g/litre, the prompt transfer into the aqueous phase is successfully achieved.

Instead of the above octyl alcohol, it is also possible to use isodecanol. In this case, too, the preferable addition amount is 2 to 5% by volume.

The cobalt oxalate recovered by this method does not contain other salts. Hence, water rinsing is hardly needed. As another advantage, dewatering and drying operation is easy because of its crystalline form.

Furthermore, in many cases, when cobalt in powder form is to be obtained out of the recovered cobalt oxalate, fine particles of cobalt oxide are obtainable through roasting at 300 to 350°C (in the case of using the hydroxide compound by the conventional method, the temperature was 900 to 1,000°C). If metallic cobalt powder is to be produced, fine particles can be obtained through direct reduction of cobalt oxalate. This is another merit of this invention.

For example, the oxide compound obtained through roasting of cobalt hydroxide is either in granular or lump form, and it must be crushed to produce the powder form. On the other hand, the oxide compound or metallic powder to be obtained from cobalt oxalate is usually fine powder of below 2 μm (average particle size).

More concrete explanation is given below on this invention.

The original liquid to be treated in this invention is a wet type refining liquid of ores containing cobalt and nickel or an acidic liquid containing cobalt obtained through the recovery treatment of valuable metals from waste catalysts, metal scraps, etc. The leaching solution obtained from the above ores, waste catalyst or metal scrap often contains salts of other metals than cobalt and nickel, e.g. salts of iron, chrome, or copper.

If such an original solution is to be handled by this invention, metal salts like iron, chrome, or copper salts must be removed in advance from the solution through such operations as filtration, or ion exchange. The original solution after removal of other metals as impurities is contacted with the organic solvent containing the extraction agent via a counter current multi-stage system.

As the extraction agent, the cation exchange type agents 2-ethyl hexylphosphonate mono-2-ethyl hexylester or di-2 ethyl hexylphosphate are used. In contact with the solution containing cobalt and nickel or cobalt alone, it shows the outstanding performance that only $Co^{++}$ as cation is selectively extracted, while the transfer of anions ($SO_4^{--}$, $Cl^-$, $NO_3^-$) is kept low.

The extraction agents used in this invention i.e., 2-ethyl hexylphosphonate mono-2-ethylester and di-2 ethyl hexylphosphate are shown in Formulae (1) and (2) respectively.

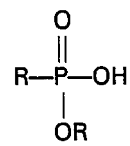 (1)

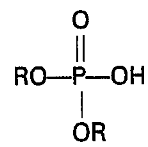 (2)

(In the above structural formulae, R means 2 ethyl hexyl group or 3,5,5-trimethyl hexyl group or isodecyl group.)

In this invention, the above extraction agent is diluted with the non-activated solvent like kerosene preferably to 5 to 20% by volume and adjusted to the specified concentration to be used as the organic solvent. This solvent is brought in contact in multi-stage way with the solution containing cobalt and nickel or with the solution containing cobalt only. In this way, cobalt is selectively extracted into the above organic solvent.

This extraction is conducted preferably at pH 4.5 to 5.0. If pH is below 4.5 at the extraction step, the extraction of acid into the organic solvent is promoted. On the other hand, if pH is above 5.0, nickel is extracted and the viscosity of the organic solvent is unfavorably enhanced.

Formula (3) shows the extraction reaction with cobalt of 2-ethyl hexylphosphonate mono-2-ethyl hexylester, which is the extraction agent in this extraction system, while Formula (4) indicates the extraction reaction of cobalt of di-2 ethyl hexylphosphate.

$$CoCl_{2(aq)} + 2(RORPOOH)_{(org)} \rightleftharpoons Co(RORPOO)_{2(org)} + 2HCl_{(aq)} \quad (3)$$

$$CoSO_{4(aq)} + 2[(RO)_2POOH] \rightleftharpoons Co[(RO)POO]_{2(org)} + H_2SO_{4(aq)} \quad (4)$$

Where, R in the Formula shows 2 ethyl hexyl group or 3,3,5-trimethyl hexyl group or isodexyl group. Org means the organic phase containing

the extraction agent. Aq indicates the aqueous phase containing cobalt or nickel.

As shown in the extraction reaction formula of the above (3) and (4), only cobalt is transferred to the organic phase containing the extraction agent. Such anion as $Cl^-$ or $SO_4^{--}$ remains in the aqueous phase together with nickel and sodium salt. In this way, the impurities to be removed whe cobalt in powder form is obtained, i.e., nickel, $Cl^-$, $SO_4^{--}$, NaCl, $Na_2SO_4$, etc. can be separated from cobalt at the extraction process under the proper conditions.

The conditions in the above extraction operation are explained in more concrete way by reference to Fig. 1, Fig. 2 and Fig. 3.

Fig. 1 shows the curves indicating the relation between pH value at the extraction time and $Cl^-$ amount to be transferred into the extraction agent. The curve (1) in Fig. 1 represents the case with 2-ethyl hexylphosphonate mono-2-ethyl hexylester, while the curve (2) shows the case with di-2 ethyl hexylphosphate. These extraction agents were diluted with kerosene to 20% by volume.

In order to prevent such anions as $Cl^-$ from transferring into the organic solvent, the extraction at pH 6.0 or higher is preferable, as shown in Fig. 1. However, as pH value is enhanced, the viscosity of the solvent is increased and such troubles were found as a poor phase separation between the organic phase and aqueous phase. In this connection, pH range of 4.5 to 5.0 is proper in order to keep the viscosity low at the time of extraction.

Fig. 2 shows the extraction rates of cobalt and nickel in such a case, where the kerosene solution containing 20% by volume of the extraction agent, i.e. 2-ethyl hexylphosphonate mono-2-ethyl hexylester, is used as the organic solvent and is brought into contact with a solution containing each 10 g/l of cobalt and nickel. The conditions at the extraction time are as follows: The volume ratio of the organic phase to aqueous phase is 1:1. The temperature of the solution is 45°C. The mixing time is 30 minutes.

As shown in Fig. 2, the separation property of cobalt and nickel is very good, when the extraction is carried out with the solvent containing this extraction agent. In contact with a solution containing 10 g/l of cobalt and 2 g/l of nickel, the nickel content in cobalt could be kept as low as 0.04% under the condition of pH 4.5 to 5.0. The concentration of cobalt which remained in the aqueous phase was 0.001 g/l. Hence, nickel separated in the aqueous phase can be recovered as nickel with high purity via the neutralization process with alkali and water washing process.

Fig. 3 shows the extraction rates of cobalt and nickel in such a case, where the kerosene solution containing 20% by volume of the extraction agent, i.e., di-2 ethyl hexylphosphate, is used as the organic solvent and is brought into contact with a solution containing each 10 g/l of cobalt and nickel.

As shown in Fig. 2, the separation property of cobalt and nickel is not good when the extraction is carried out with the solvent containing this extraction agent. However, this system can be applied to the scrap containing no nickel, namely to the treatment of cemented carbide, etc.

pH adjustment in such an extraction operation can be made through the advance addition of alkali to the extraction agent. Alkali can be also added at the time of the contact mixing. This extraction operation can be carried out in accordance with the normal solvent extraction procedures for liquid-liquid extraction.

As the next step in this invention, the organic solvent, in which cobalt is extracted, is brought into contact with the aqueous solution containing oxalic acid. Thereby, cobalt is subjected to the stripping from the above organic solvent into the aqueous phase in form of cobalt oxalate.

The oxalic acid solution to be used then can be obtained by dissolving commercially available oxalic acid into purified water. However, in order to avoid the mixing of such impurities as dirts, it is preferred to use the filtered liquid after the dissolution.

Formula (5) shows the extraction formula of this stripping in the case of the extraction agent of 2-ethyl hexylphosphate mono-2-ethyl hexylester.

$$Co(RORPOO)_2+C_2H_2O_4=2(RORPOOH)+CoC_2O_4\downarrow \quad (5)$$

As shown in Fig. 2, the reaction formula of the above (5) is shifted in the right when pH value is below 2.5. Hence, it is desirable to keep the concentration of oxalic acid in the stripping process about 1.5 to 1.8 times as high as that of cobalt to be released into the aqueous phase.

The cobalt oxalate obtained through the above reaction formula (5) has the form of fine particle sediments, and builds in some cases a third phase beside the organic phase and aqueous phase, deteriorating the phase separation property. However, the phase separation property in such a case can be improved by adding octyl alcohol in an amount of 2 to 5%.

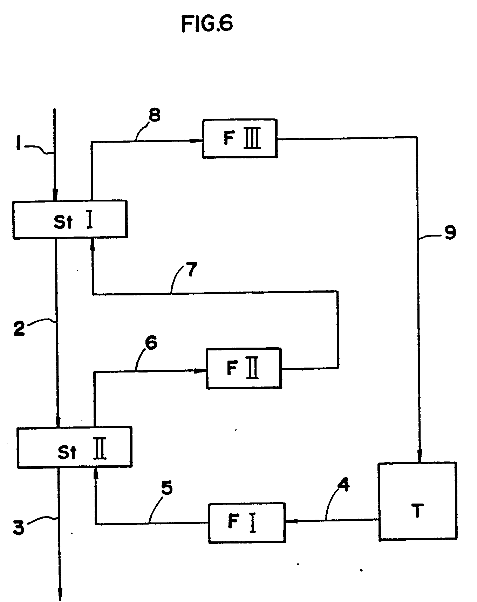

It the cobalt concentration in the organic solvent containing the extraction agent is too high, lumps of cobalt oxalate would be formed and float in the organic solvent up on contact with oxalic acid aqueous solution. The phase separation would be then deteriorated as in the above case. Consequently, it is desired to adjust the concentration of cobalt concentration to the range of 5 to 10 g/l in the aqueous phase after the stripping. For this adjustment of cobalt concentration, the extraction curve of Fig. 4 and the release curve of Fig. 5 are used.

The extraction curve of Fig. 4 shows the extraction equilibrium, when the extraction agent of 2-ethyl hexylphosphonate mono-2-ethyl hexylester is diluted with kerosene to 20% by volume to obtain the organic solvent, which is then mixed with the aqueous solution containing cobalt at the ratio of 1:1, followed by the agitating contact for 30 minutes at 40°C.

If the concentration of cobalt in the aqueous solution to be supplied to the extraction process

is determined, the stage number of the extraction and the cobalt concentration in the organic solvent to be supplied to the stripping process can be controlled freely by setting the ratio of organic solvent to aqueous phase in arbitrary way in reference to Fig. 4.

In the similar way, the release curve of Fig. 5 shows the release equilibrium, when the above organic solvent containing the cobalt and the aqueous solution containing 25 g/l of oxalic acid are mixed at the ratio of 1:1, followed by agitation and contact for 30 minutes at 40°C. If the concentration of cobalt in the organic solvent discharged from the extraction process is known, the stage number of the stripping and the concentration of cobalt stripped into the aqueous phase can be controlled by setting the arbitrary ratio of organic solvent to aqueous phase.

The stripping operation is conducted by use of the multi-stage counter current system having more than 2 stages.

At the reverse extraction at the 2nd stage, cobalt oxalate formed in the aqueous phase disturbs the phase separation during the stripping of the 1st stage. Hence the aqueous phase after the stripping is filtered and then supplied to the stripping of the 1st stage. In a similar way, the aqueous phase obtained in the 3rd stage is supplied to the 2nd stage after the filtration, and so on. Then, the stripping operation can be carried out more effectively.

The heating at the stripping operation is an effective means to improve the phase separation property. The preferable heating temperature range is 30 to 60°C, if kerosene is used as the diluting agent.

The steps of the above stripping operation are further explained by referring to Fig. 6.

Fig. 6, "St I" and St II" represent the stripping of the 1st stage and the 2nd stage, while "FI", "FII" and "FIII" mean the filtration process. "T" shows the oxalic acid adjustment tank.

"1" shows the supply line of the organic phase containing cobalt after the extraction step to the 1st stage stripping step, "2" shows the supply line of the same organic phase to the 2nd stage stripping step, "3" means the transfer line of purified organic solvent after the release of cobalt, "4" means the supply line of oxalic acid, which is dissolved into the purified water, to the filtration step, "5" means the supply line to the 2nd stage stripping step of oxalic acid aqueous solution after the filtration and purification, "6" means the supply line to the filtration step of the aqueous phase containing cobalt oxalate after the 2nd stage stripping step, "7" shows the supply line to the 1st stage stripping step of the aqueous phase after the filtration, "8" shows the supply line to the filtration step of the aqueous phase containing cobalt oxalate after the 1st stage stripping and "9" shows the return line to the oxalic acid adjustment tank of the aqueous phase after the filtration of cobalt oxalate.

In Fig. 6, the organic solvent containing cobalt after the extraction step is supplied to the 1st stage stripping step "St I" via the line "1". Simultaneously, the oxalic acid aqueous solution from the filtration step "FII" is supplied to the above step St I via the line "7", so that both solutions may come into contact.

Then, cobalt forms crystals of handy soluble cobalt oxalate, which is stripped from the organic phase to the aqueous phase. This aqueous phase is sent via the line "8" to the filtration step FIII. After dehydration at FIII, it is recovered as high purity cobalt oxalate.

On that occasion, oxalic acid solution of the aqueous phase is sent to "T" via the line. "9" for the purpose of circulation and utilization.

The organic solvent from the above 1st stage stripping step is transferred to the 2nd stage stripping step "St II" via the line "2". At the same time, the oxalic acid solution purified at the filtration step "FI" is injected to the above step "St II" via the line "5" for the purpose of the contact between both the solutions.

The organic solvent treated with the same above step is purified and is circulated for use to the extaction step via the line 3. The cobalt oxalate formed at the above step "St II" is recovered from the line "6" via the filtration step "FII".

Cobalt oxalate obtained in the above way can be used as it is for the raw material of metal powder or oxide powder. If washed with water, however, the purity can be further enhanced. As for the pure water amount to be used then, about 10 litres of water per kg of cobalt is enough under normal circumstances.

Oxalic acid solution utilized for circulation in the above stripping contains around 0.05 g/l of cobalt oxalate. Since nickel as an impurity is gradually accumulated, a part of the solution is taken out of the line "9", and is treated separately.

For example, the neutralization treatment is applied and the blended sediment (hydroxides, etc.) of nickel and cobalt is recovered. After water washing, it is dissolved with the leaching liquid of the initial step and is treated via circulation.

## Claims

1. A cobalt recovery method, comprising the recovery of cobalt oxalate containing no other salts, where an extraction agent mainly composed of 2-ethyl hexylphosphonate mono-2-ethyl hexylester or di-2-ethyl hexylphosphate is used in order to extract, by liquid-liquid extraction, and separate cobalt from an aqueous solution containing cobalt and possibly nickel and other metal salts, said other metal salts, if present, being removed from said solution, except for sodium and calcium salts, prior to the liquid-liquid extraction, so that cobalt ions may be selectively shifted into said extraction agent and, after the separation from nickel ions, sodium salt, and calcium salt in said solution, said extraction agent containing cobalt is brought into contact with an aqueous solution of oxalic acid so that cobalt is subjected to stripping into the oxalic acid solution.

2. A method as claimed in claim 1, wherein the pH of the solution containing the cobalt salt is adjusted to the range of 4.5 to 5.0 at the time of the cobalt extraction.

3. A method as claimed in claim 1 or 2, wherein 2 to 5% by volume of octyl alcohol is added to the extraction agent to act as an emulsification inhibitor at the stripping step of cobalt.

4. A method as claimed in claim 1, 2 or 3, wherein a filtration process is provided for each stripping step of the aqueous solution of oxalic acid following the preceding stripping step, so that the cobalt oxalate, amount in the respective stripping tank may be minimized, thus to inhibit the formation of an emulsion.

**Patentansprüche**

1. Verfahren zur Rückgewinnung von Cobalt, bei dem Cobaltoxalat, das keine anderen Salze enthält, zurückgewonnen wird, wobei ein Extraktionsmitttel, das hauptsächlich aus 2-Ethylhexylphosphonsäure-mono-2-ethylhexylester oder Di-2-ethylhexylphosphat besteht, verwendet wird, um Cobalt durch Flüssig-Flüssig-Extraktion zu extrahieren und von einer wäßrigen Lösung abzutrennen, die Cobalt- und möglicherweise Nickel- und andere Metallsalze enthält, wobei die anderen Metallsalze, wenn sie vorhanden sind, mit Ausnahme von Natrium- und Calciumsalzen vor der Flüssig-Flüssig-Extraktion aus der Lösung entfernt werden, so daß Cobaltionen selektiv in das Extraktionsmittel überführt werden können, und das cobalthaltige Extraktionsmittel nach der Abscheidung von Nickelionen, Natrium- und Calciumsalz, die in der Lösung enthalten sind, mit einer wäßrigen Oxalsäurelösung in Kontakt gebracht wird, so daß Cobalt in die Oxalsäurelösung rückextrahiert wird.

2. Verfahren nach Anspruch 1, bei dem der pH der Lösung, die das Cobaltsalz enthält, zum Zeitpunkt der Cobaltextraktion auf einen Wert zwischen 4,5 und 5,0 eingestellt ist.

3. Verfahren nach Anspruch 1 oder 2, bei dem dem Extraktionsmittel 2 bis 5 Volumen% Octylalkohol zugesetzt werden, um im Cobalt-Rückextraktionsschritt als Mittel zur Verhinderung einer Emulsionsbildung zu wirken.

4. Verfahren nach Anspruch 1, 2 oder 3, bei dem für jeden Rückextraktionsschritt der wäßrigen Oxalsäurelösung ein Filtriervorgang vorgesehen ist, der auf den vorhergehenden Rückextraktionsschritt folgt, so daß die Cobaltoxidat-Menge in des jeweiligen Rückextraktionsbehälter auf ein Mindestmaß verringert werden kann, um auf diese Weise eine Emulsionsbildung zu verhindern.

**Revendications**

1. Procédé de récupération du cobalt comprenant la récupération d'oxalate de cobalt ne contenant auncun autre sel, dans lequel un agent d'extraction composé principalément de 2-éthyl hexylphosphate, mono-2-éthyl hexylester ou de di-2-éthyl héxylphosphate, est utilisé de façon à extraire, par extraction liquide-liquide, et à séparer le cobalt à partir d'une solution aqueuse contenant du cobalt et éventuellement du nickel et d'autres sels métalliques, lesdits autres sels métalliques lorsqu'il y en a, étant éliminés de ladite solution, à l'exception des sels de sodium et de calcium, avant l'extraction liquide-liquide, de sorte que des ions cobalt peuvent être déplacés dans ledit agent d'extraction et, après la séparation des ions de nickel, les sels de sodium, et les sels de calcium dans ladite solution, ledit agent d'extraction contenant du cobalt est mis en contact avec une solution aqueuse d'acide oxalique de sorte que le cobalt est soumis à une récupération dans la solution d'acide oxalique.

2. Procédé selon la revendication 1 dans lequel le pH de la solution contenant le sel de cobalt est ajusté dans l'intervalle 4,5 à 5,0 au moment de l'extraction du cobalt.

3. Procédé selon la revendication 1 ou 2 dans lequel 2 à 5% en volume d'octyalcool sont ajoutés à l'agent d'extraction pour agir en tant qu'inhibiteur d'émulsification au moment de l'étape de récupération du cobalt.

4. Procédé selon la revendication 1, 2 ou 3 dans lequel on utilise un procédé de filtration pour chaque étape de récupération de la solution aqueuse d'acide oxalyque suivant l'étape de récupération précédente, de sorte que la quantité d'oxalate de cobalt dans le réservoir de récupération concerné peut être diminuée, afin d'empêcher la formation d'une émulsion.

FIG.1

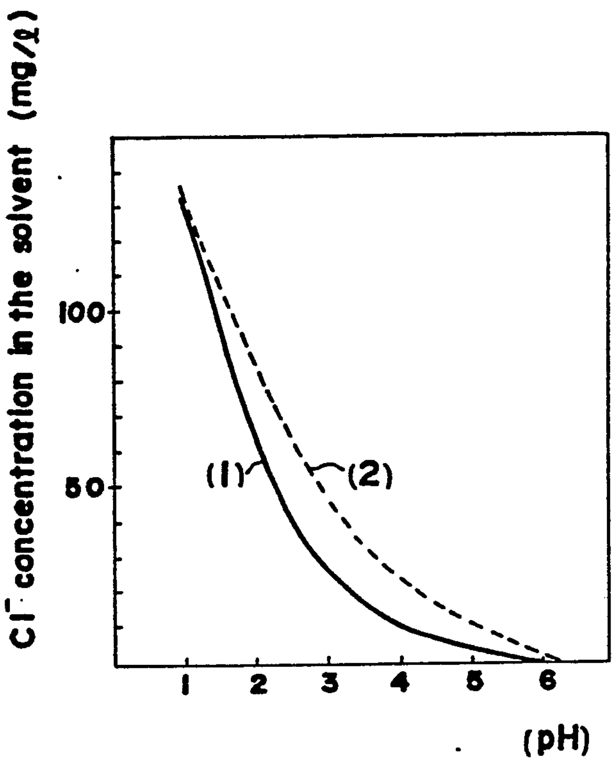

FIG.2

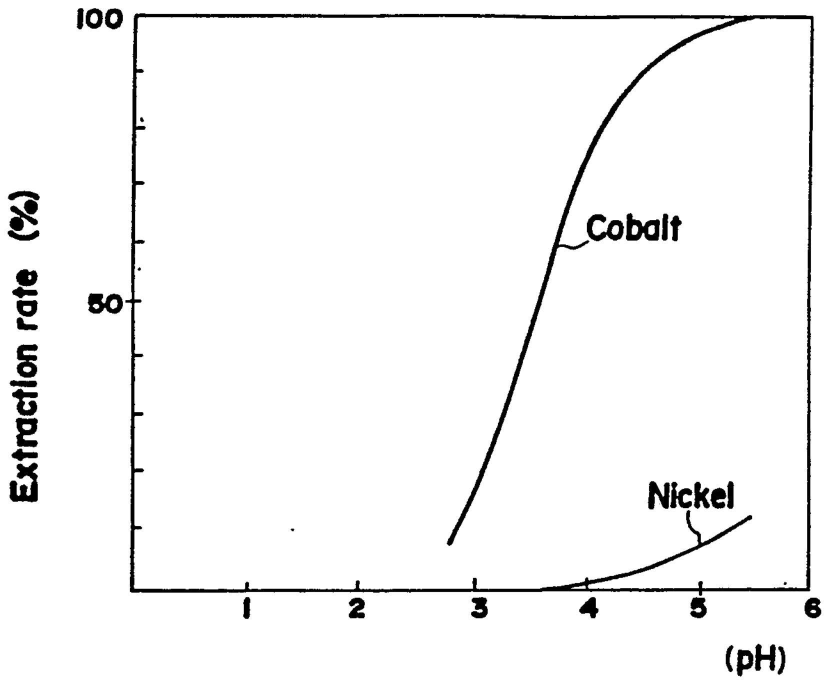
100
50
Extraction rate (%)
Cobalt
Nickel
1
2
3
4
5
6
(pH)

FIG.3

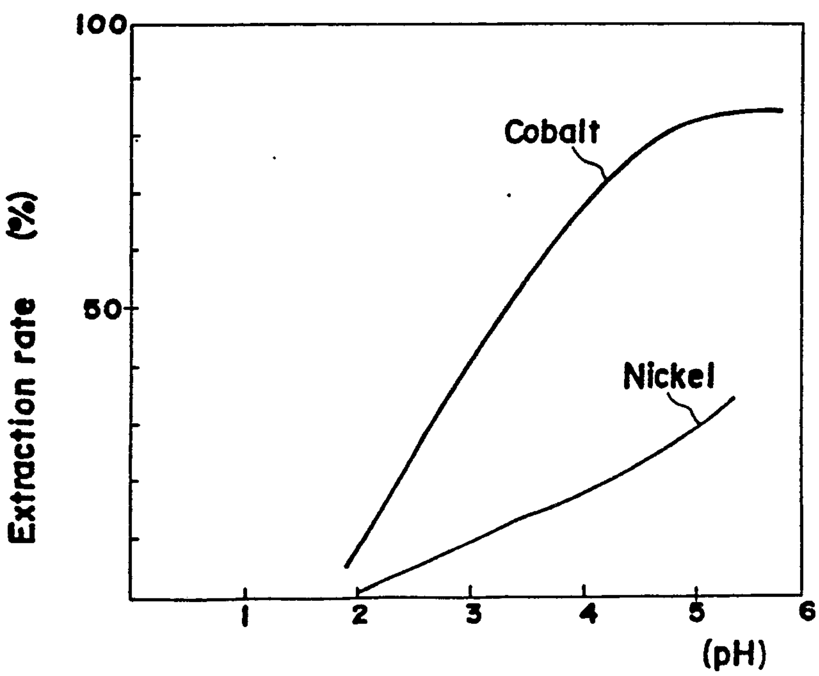
100
50
Extraction rate (%)
Cobalt
Nickel
1
2
3
4
5
6
(pH)

FIG.4

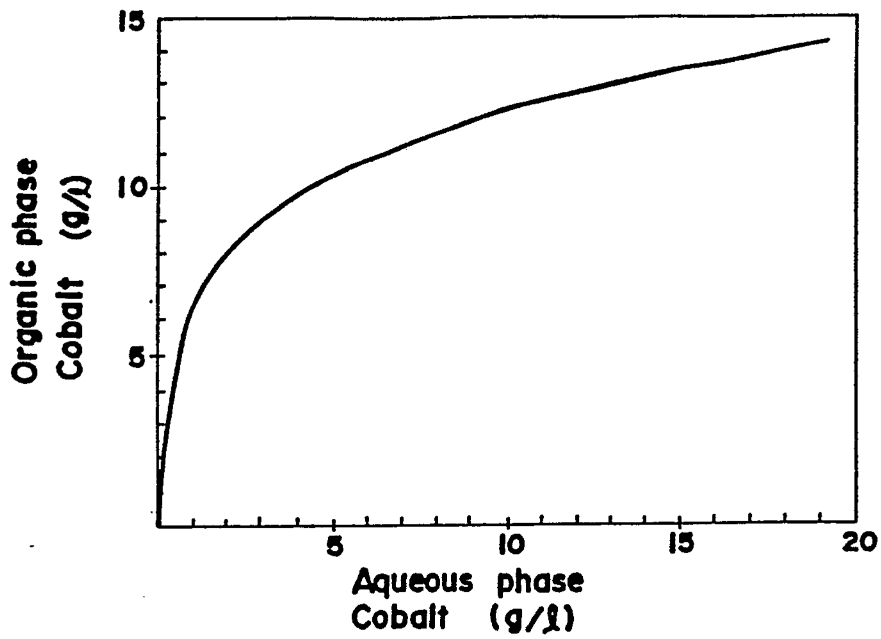
15
10
5
Organic phase
Cobalt (g/l)
5
10
15
20
Aqueous phase
Cobalt (g/l)

FIG.5

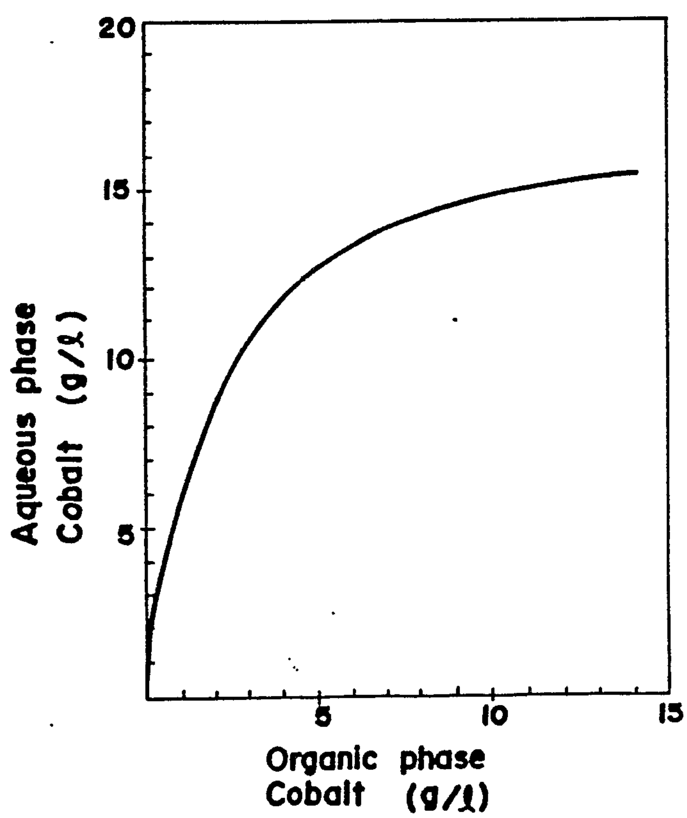
20
15
10
5
Aqueous phase
Cobalt (g/l)
5
10
15
Organic phase
Cobalt (g/l)

FIG.6